# FASCICULE DE BREVET EUROPEEN

(11) **EP 3 175 742 B1**
(45) Date de publication et mention de la délivrance du brevet: **09.05.2018**
(21) Numéro de dépôt: 16200434.5
(22) Date de dépôt: 24.11.2016
(51) Int. Cl.: A47F 5/08, A47B 57/14, A47B 97/00, B23B 47/28, B23B 49/04, A47F 7/28, A47B 73/00

(54) **INSTALLATION MURALE ET PROCEDE DE MONTAGE**
WANDHALTERUNG UND MONTAGEVERFAHREN
WALL MOUNT AND MONTING PROCESS

(30) Priorité: 04.12.2015 FR 1561866
(43) Date de publication de la demande: 07.06.2017
(73) Titulaire: Cie Europe, 59160 Lomme (FR)
(72) Inventeur: EPICUREO, Giulio, 59000 Lille (FR)
(74) Mandataire: Balesta, Pierre

(56) Documents cités:
- DE-A1- 3 106 310
- FR-A5- 2 106 862
- FR-A5- 2 204 965
- US-A- 4 098 481

## Description

### Arrière-plan de l'invention

La présente invention concerne le domaine des installations murales et des systèmes de rangement, qui sont généralement destinés à être installés dans des lieux de vie, comme par exemple la cuisine, la salle de bains, le garage, ou toute autre pièce d'une maison ou d'un appartement.

Une installation murale représentant l'état de la technique est par exemple connue de US4098481A.

Il est connu que la surface habitable moyenne par personne, en particulier en zone urbaine, tend à diminuer, notamment en raison du prix élevé de l'immobilier. Pour autant, le nombre d'objets possédés ne cesse de croître, si bien que les individus ont besoin de toujours plus de solutions de rangement.

Pour ranger des objets, il est connu d'utiliser des placards ou armoires, ou encore de fixer des étagères à un mur. Cependant, les placards et armoires sont des systèmes de rangement encombrants, parfois difficiles à installer et peu modulables. En outre, de plus en plus de magasins proposent des meubles ou étagères à monter soi-même, ce qui peut se révéler fastidieux. Non seulement il n'est pas aisé de fixer des étagères à un mur, mais encore cela devient particulièrement complexe si l'on doit ensuite les déplacer, par exemple pour modifier l'agencement des étagères.

### Objet et résumé de l'invention

La présente invention a pour but de résoudre, parmi d'autres, les insuffisances décrites plus haut des installations murales et des systèmes de rangement connus de l'art antérieur, en proposant une installation murale pour rangement qui puisse être fixée facilement et solidement à une paroi murale.

Ce but est atteint par le fait que l'invention porte tout d'abord sur une installation murale comportant au moins un premier et un deuxième montants ayant respectivement une première et une deuxième directions longitudinales et étant configurés pour recevoir de manière amovible respectivement un premier et un deuxième dispositifs de fixation d'un accessoire de rangement de l'installation murale, les premier et deuxième dispositifs de fixation étant espacés l'un de l'autre d'une première distance, les premier et deuxième montants comportant respectivement au moins un premier et un deuxième moyens de fixation supérieurs configurés pour fixer les premier et deuxième montants sur une paroi murale ; en outre, au moins le premier montant comporte au moins un premier moyen de repérage, le premier moyen de repérage et le premier moyen de fixation supérieur étant espacés l'un de l'autre de la première distance.

La paroi murale est par exemple une paroi verticale, telle qu'un mur ou une cloison.

L'installation murale est fixée, par exemple par vissage, entre autres par l'intermédiaire des premier et deuxième moyens de fixation supérieurs, à la paroi murale. L'accessoire de rangement, configuré pour être fixé aux premier et deuxième montants, est donc agencé pour être fixé de manière démontable à l'installation murale, sans outillage.

La présence du premier moyen de repérage, situé à une distance du premier moyen de fixation supérieur sensiblement identique à la distance séparant les premier et deuxième dispositifs de fixation de l'accessoire de rangement destinés à être fixés respectivement aux premier et deuxième montants de l'installation murale, permet de faciliter la fixation de l'installation murale, et plus particulièrement permet de ne pas requérir d'outillage supplémentaire et d'opérations fastidieuses pour disposer les premier et deuxième montants de manière adaptée à la fixation de l'accessoire de rangement.

En d'autres termes, la présence du premier moyen de repérage, en particulier du fait de son agencement relativement au premier moyen de fixation supérieur, contribue à la facilité, et par suite à la fiabilité, de la fixation de l'installation murale sur la paroi murale.

De préférence, la première distance est considérée entre le premier axe passant par le premier moyen de fixation supérieur du premier montant, et le premier moyen de repérage.

De manière avantageuse, la première distance est considérée entre le centre des premier et deuxième dispositifs de fixation de l'accessoire de rangement.

L'invention est déclinée ci-après dans une série de variantes de réalisation, qui peuvent être considérées seules ou en combinaison avec une ou plusieurs des précédentes.

Avantageusement, le premier moyen de repérage comporte un orifice de fixation pour la fixation murale du premier montant.

La présence de l'orifice de fixation permet d'améliorer la solidité et la stabilité de la fixation du premier montant sur la paroi murale.

De manière avantageuse, le premier moyen de repérage comporte un orifice de repérage.

On comprend donc que la première distance est définie comme étant la distance séparant le premier axe, passant par le premier moyen de fixation supérieur, et un deuxième axe, passant par l'orifice de repérage du premier moyen de repérage.

Selon un mode de réalisation préférentiel, le moyen de repérage comporte un unique orifice formant à la fois orifice de fixation et orifice de repérage.

L'orifice de repérage permet de faciliter l'opération consistant à identifier sur la paroi murale la position correspondant au premier moyen de repérage, lors du montage de l'installation murale sur la paroi murale ; on peut ainsi prévoir le passage d'une mine de crayon ou d'une pointe de stylo ou d'un embout pointu au travers dudit orifice de repérage, pour effectuer une marque sur la paroi murale.

De préférence, le premier montant comporte un premier et un second éléments longitudinaux s'étendant de manière sensiblement parallèle l'un à l'autre.

Les premier et second éléments longitudinaux sont espacés l'un de l'autre, et s'étendent selon une direction sensiblement parallèle l'une à l'autre, de préférence selon une direction sensiblement parallèle à la première direction longitudinale du premier montant ; les premier et second éléments longitudinaux permettent ainsi de faciliter la fixation du premier dispositif de fixation de l'accessoire de rangement destiné à être fixé sur l'installation murale, l'espace formé entre les éléments longitudinaux facilitant la coopération avec le premier dispositif de fixation de l'accessoire de rangement.

En outre, la présence des éléments longitudinaux permet de mieux répartir les efforts exercés par l'accessoire de rangement lorsqu'il est fixé de manière amovible à l'installation murale ; les éléments longitudinaux contribuent ainsi à la solidité de la fixation murale du premier montant.

Avantageusement, le premier moyen de repérage comporte une plaque fixée, par exemple soudée, aux premier et second éléments longitudinaux.

Par cette disposition, la stabilisation du premier moyen de repérage, lors de l'étape de montage, est améliorée, ce qui contribue à la précision de l'identification de la position du premier moyen de repérage, et par suite participe à la fiabilité de la fixation de l'installation murale sur la paroi murale.

De manière avantageuse, le premier moyen de fixation supérieur est configuré pour permettre au premier montant de pivoter, dans le plan de la paroi murale, autour d'un axe perpendiculaire à la première direction longitudinale.

Cette caractéristique du premier moyen de fixation supérieur facilite le déplacement du premier montant relativement à la paroi murale, et par suite le montage de l'installation murale.

La présence du premier moyen de fixation supérieur permet ainsi au premier montant d'être déplacé selon un unique degré de liberté, dans le plan de la paroi murale.

De préférence, les premier et deuxième montants comportent respectivement un premier et un deuxième moyens de montage configurés pour coopérer respectivement avec les premier et deuxième dispositifs de fixation de l'accessoire de rangement.

La présence des premier et deuxième moyens de montage facilite la fixation amovible de l'accessoire de rangement, et plus particulièrement de ses premier et deuxième dispositifs de fixation, sur les premier et deuxième montants de l'installation murale.

Avantageusement, les premier et deuxième moyens de montage comportent chacun au moins une première traverse supérieure et une première traverse inférieure configurées pour coopérer respectivement avec une partie d'extrémité supérieure et une partie d'extrémité inférieure des premier et deuxième dispositifs de fixation.

La présence des premières traverses inférieure et supérieure sur chacun des premier et deuxième moyens de montage contribue à la solidité et à la stabilité de la fixation amovible de l'accessoire de rangement sur les premier et deuxième montants de l'installation murale.

De manière avantageuse, les premier et deuxième montants comportent en outre un premier et un deuxième moyens de fixation inférieurs configurés pour fixer les premier et deuxième montants sur la paroi murale.

Les premier et deuxième moyens de fixation inférieurs améliorent encore la fixation murale des premier et deuxième montants ; ils contribuent ainsi à la solidité de la fixation de l'installation murale sur la paroi murale.

L'invention porte également sur un système de rangement comprenant une installation murale selon la présente invention, et un accessoire de rangement ayant un premier et un deuxième dispositifs de fixation espacés l'un de l'autre d'une première distance, les premier et deuxième dispositifs de fixation étant configurés pour être fixés de manière amovible respectivement aux premier et deuxième montants.

Avantageusement, l'accessoire de rangement comporte au moins un élément de rangement, par exemple un élément de support, qui est solidaire des dispositifs de fixation ; l'élément de rangement est destiné à porter le ou les objets à ranger.

L'accessoire de rangement peut être de tout type. De façon avantageuse, mais non limitative, il comporte un crochet, un réceptacle, un plateau, un porte-serviettes ou un porte-bouteilles.

Cela permet ainsi de monter facilement le système de rangement et de pouvoir en modifier rapidement et sans effort la configuration. L'utilisateur peut alors utiliser un ou plusieurs accessoires de rangement, en fonction, entre autres, de ses besoins, de la taille de l'installation murale et des dimensions de l'espace environnant la zone de la paroi murale sur laquelle est fixée l'installation de rangement. En outre, ce montage aisé permet à l'utilisateur de déplacer ou retirer les accessoires de rangement qu'il n'utilise plus, ou encore de les remplacer par d'autres accessoires de rangement mieux adaptés à ses besoins.

En outre, grâce à l'invention, l'utilisateur peut s'équiper en nouveaux accessoires de rangement et les monter à l'installation murale, afin de créer son propre système de rangement, de manière que celui-ci corresponde à ses besoins et ses envies. Autrement dit, le système de rangement selon l'invention est aisément personnalisable et modulable.

De préférence, le système de rangement comprend une installation murale dont les premier et deuxième montants comportent chacun des premières traverses inférieure et supérieure, les premier et deuxième dispositifs de fixation de l'accessoire de rangement comportant chacun une partie d'extrémité supérieure et une partie d'extrémité inférieure configurées pour coopérer respectivement avec une partie supérieure des premières traverses supérieures et avec les premières traverses inférieures des premier et deuxième montants.

Les premières traverses inférieures et supérieures des premier et deuxième montants et les parties d'extrémité supérieures et inférieures des premier et deuxième dispositifs de fixation contribuent à la facilité et à la stabilité de la fixation amovible de l'accessoire de rangement sur l'installation murale ; on comprend ainsi que la charge de l'accessoire de rangement et des éventuels objets qui peuvent y être liés est répartie sur les traverses des premier et deuxième montants.

Avantageusement, les parties d'extrémité supérieures forment chacune un crochet agencé pour coopérer avec les premières traverses supérieures des premier et deuxième montants.

La forme en crochet des parties d'extrémité supérieures des premier et deuxième dispositifs de fixation de l'accessoire de rangement améliore encore la facilité et la solidité de la fixation amovible de l'accessoire de rangement sur les premier et deuxième montants de l'installation murale. De préférence, le crochet s'engage avec la partie supérieure des premières traverses supérieures.

Par exemple et de manière non limitative, les dispositifs de fixation comportent un corps en forme de plaque et le crochet s'étend depuis l'extrémité supérieure dudit corps.

Préférentiellement, les crochets s'étendent entre la première traverse supérieure et la paroi murale lorsque les dispositifs de fixation de l'accessoire de rangement sont accrochés à l'installation murale, et que les premier et deuxième montants sont fixés à la paroi murale, les crochets venant en appui au-dessus des premières traverses supérieures.

Après l'accrochage amovible de l'accessoire de rangement à l'installation murale, ses dispositifs de fixation sont rendus solidaires de l'installation murale par le fait que la partie d'extrémité supérieure des dispositifs de fixation coopère avec la partie supérieure des premières traverses supérieures. Par ailleurs, lorsque l'accessoire de rangement est accroché à l'installation murale, ses dispositifs de fixation viennent au contact d'au moins la première traverse inférieure des premier et deuxième montants, afin de stabiliser les dispositifs de fixation en position verticale.

De manière avantageuse, les premier et deuxième dispositifs de fixation comportent une face arrière configurée pour être dirigée vers la paroi murale lorsque les premier et deuxième montants sont fixés à la paroi murale et que l'accessoire de rangement est fixé de manière amovible aux premier et deuxième montants, l'accessoire de rangement comportant en outre une couche de revêtement disposée sur chacune des faces arrière.

Les couches de revêtement permettent tout d'abord de ne pas dégrader la surface des premier et deuxième montants avec laquelle l'accessoire de rangement est en contact lorsqu'il est fixé de manière amovible à l'installation murale, et plus particulièrement la surface des premier et deuxième moyens de montage, de manière à permettre de modifier facilement l'agencement du/des accessoires de rangement sur l'installation murale, si besoin de manière répétée.

Par ailleurs, les couches de revêtement permettent de réduire le jeu qui pourrait exister entre l'accessoire de rangement et l'installation murale, une fois que l'accessoire de rangement a été fixé aux premier et deuxième montants, contribuant ainsi à la solidité et à la stabilité du système de rangement.

De préférence, les couches de revêtement comportent une couche de matériau souple, élastique, tel que de la mousse.

Selon un mode de réalisation avantageux, au moins l'une des premières traverses inférieure et supérieure des premier et deuxième moyens de montage comporte en outre un dispositif d'adhérence pour améliorer l'adhérence des dispositifs de fixation de l'accessoire de rangement auxdites traverses. On comprend que le dispositif d'adhérence s'oppose au déplacement des dispositifs de fixation par rapport aux premières traverses supérieures des premier et deuxième montants. On empêche ainsi que les dispositifs de fixation ne pivotent autour de l'axe des premières traverses supérieures, ou bien qu'ils ne se translatent selon une direction parallèle auxdites premières traverses. Le dispositif d'adhérence peut former une seule pièce avec l'installation murale ou bien être une pièce rapportée. De préférence, il s'agit d'une pièce plastique ou caoutchouc.

L'invention porte également sur un kit d'installation comprenant une installation murale selon la présente invention, et un moyen de contrôle configuré pour être fixé sur le premier montant et pour permettre de contrôler que la première direction longitudinale s'étend selon une direction sensiblement horizontale lors de l'étape de montage.

Avantageusement, le moyen de contrôle est configuré pour être fixé de manière amovible au premier montant.

La présence du moyen de contrôle et sa capacité à être fixé sur le premier montant participent à la facilité et à la fiabilité de la fixation de l'installation murale et, par suite, à la solidité et à la stabilité du montage du système de rangement. En outre, la fixation, de préférence amovible, du moyen de contrôle sur le premier montant ne requiert pas l'utilisation d'outils supplémentaires, et permet à l'utilisateur de s'affranchir de la nécessité d'être assisté d'une autre personne pour fixer l'installation de rangement.

De manière avantageuse, l'un des éléments pris parmi le premier montant et le moyen de contrôle comporte une portion métallique, l'autre élément comportant une portion aimantée.

De préférence, le moyen de contrôle comporte un niveau à bulle.

La présence d'un niveau à bulle permet de contrôler facilement et de manière fiable que la première direction longitudinale s'étend selon une direction sensiblement horizontale.

De préférence, le niveau à bulle comporte une portion aimantée, de manière à pouvoir être fixé aisément et efficacement sur le premier montant, et plus particulièrement sur une portion métallique dudit premier montant.

Par cet arrangement, l'utilisateur n'est pas contraint de maintenir le moyen de contrôle sur le premier montant, et peut ainsi aisément repérer la position correspondant au premier moyen de repérage sur la paroi murale, après s'être assuré de manière directe de l'horizontalité du premier montant.

Enfin, l'invention porte sur un procédé de montage sur une paroi murale d'une installation murale selon la présente invention, dans lequel :
- on fixe sur la paroi murale le premier moyen de fixation supérieur du premier montant ;
- on pivote le premier montant dans le plan de la paroi murale autour du premier moyen de fixation supérieur, de manière que la première direction longitudinale s'étende selon une direction sensiblement horizontale ;
- on identifie sur la paroi murale une position de fixation correspondant à la position du premier moyen de repérage du premier montant ;
- on pivote le premier montant dans le plan de la paroi murale autour du premier moyen de fixation supérieur, de manière à exposer la position de fixation ;
- on fixe sur la position de fixation le deuxième moyen de fixation supérieur du deuxième montant.

Avantageusement, mais non exclusivement, l'identification sur la paroi murale de la position de fixation est réalisée par marquage, par exemple au moyen d'un crayon, d'un stylo ou d'un élément pointu.

On comprend que l'utilisateur ne requiert pas d'assistance extérieure et qu'il peut aisément et rapidement, sans dispositions particulières pour le bricolage, monter sur une paroi murale les premier et deuxième montants de l'installation murale selon la présente invention.

De manière avantageuse, dans le procédé de montage :
- on fournit en outre un accessoire de rangement comportant un premier et un deuxième dispositifs de fixation espacés l'un de l'autre de la première distance ;
- on dispose les premier et deuxième montants de manière que les première et seconde directions longitudinales s'étendent selon une direction sensiblement verticale ;
- on fixe de manière amovible les premier et deuxième dispositifs de fixation respectivement aux premier et deuxième montants.

De préférence, on fixe sur la paroi murale les premier et deuxième moyens de fixation inférieurs des premier et deuxième montants.

L'ensemble des étapes du procédé de montage selon la présente invention permet ainsi de disposer d'une structure de rangement comportant une installation murale et au moins un accessoire de rangement montés aisément de manière stable et solide sur une paroi murale, de manière à constituer un système de rangement adaptable aux différents besoins de l'utilisateur.

### Brève description des dessins

D'autres caractéristiques et avantages de l'invention définie par les revendications annexées apparaîtront plus clairement et de manière complète à la lecture de la description ci-après d'un mode de réalisation préféré, donné à titre d'exemple non limitatif et en référence aux dessins annexés suivants sur lesquels :
- la figure **1** représente schématiquement un exemple d'installation murale selon la présente invention ;
- la figure **2** représente schématiquement un exemple d'accessoire de rangement selon la présente invention ;
- les figures **3 à 7** représentent schématiquement les différentes étapes du procédé de montage sur une paroi murale d'un système de rangement selon la présente invention ;
- la figure **8** représente schématiquement une coupe transversale d'un accessoire de rangement monté sur une installation murale selon la présente invention ; et
- les figures **9** et **10** représentent schématiquement différents exemples d'accessoires de rangement selon la présente invention.

### Description détaillée de l'invention

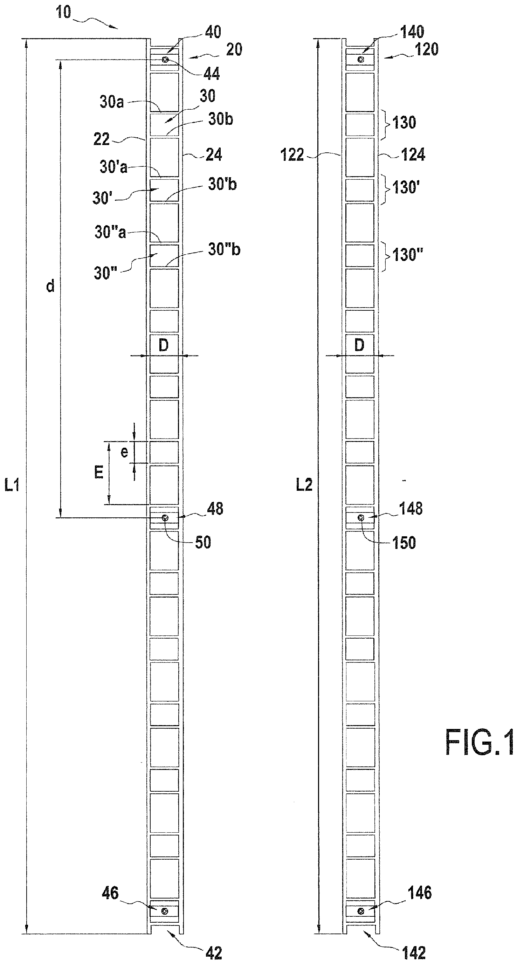

Le système de rangement **8** selon la présente invention comporte tout d'abord une installation murale **10,** représentée en particulier sur la figure **1****.**

L'installation murale **10** comporte un premier et un second montants **20, 120.** Le premier montant **20** de l'installation murale **10** présente une première direction longitudinale **L1** et un premier et un second élément longitudinaux **22, 24** s'étendant de manière sensiblement parallèle à la première direction longitudinale **L1.**

Tel que représenté en particulier sur la figure **1****,** les premier et second éléments longitudinaux **22, 24** du premier montant **20** s'étendent de manière sensiblement parallèle l'un à l'autre en étant espacés l'un de l'autre d'une distance **D.**

Le premier montant **20** comporte en outre une pluralité de paires **30, 30', 30"** de traverses qui s'étendent entre les premier et deuxième éléments longitudinaux **22, 24.** Dans cet exemple, le premier montant **20** comporte quatorze paires de traverses dont seules certaines, à des fins de clarté, ont été référencées.

Tel que représenté en particulier sur la figure **1****,** lorsque le premier montant **20** est disposé de manière que la première direction longitudinale **L1** s'étende selon une direction sensiblement verticale, les traverses des paires **30, 30', 30"** s'étendent selon une direction sensiblement horizontale.

Les paires **30, 30', 30"** de traverses sont régulièrement espacées les unes des autres ; la distance séparant deux traverses au sein d'une paire de traverses est, par exemple et de manière non limitative, identique d'une paire de traverses à l'autre. Autrement dit, les traverses **30a** et **30b** d'une première paire de traverses **30** présentent un écartement **e** qui est le même que celui existant entre les traverses **30'a** et **30'b** d'une deuxième paire de traverses **30'.** Par ailleurs, les traverses du premier montant **20** de l'installation murale **10** présentent, par exemple et de manière non limitative, des sections transversales circulaires.

Par exemple, et de manière non limitative, les traverses sont constituées par des tiges métalliques cylindriques.

On constate par ailleurs que la distance **E** entre deux paires de traverses consécutives est sensiblement plus grande que l'écart **e** entre deux traverses d'une même paire de traverses.

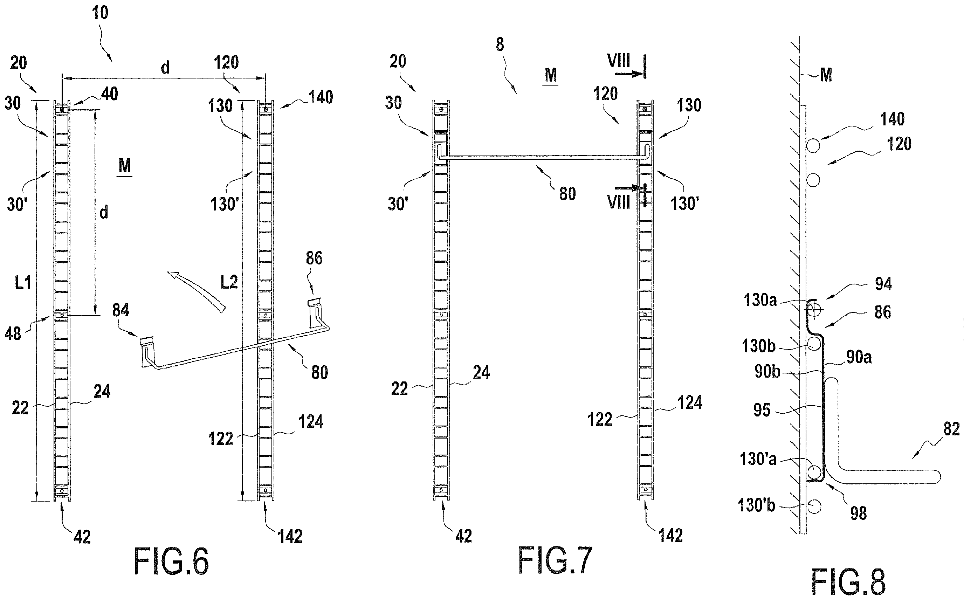

Par ailleurs, on constate, en particulier à l'observation de la figure **8****,** que les premier et deuxième éléments longitudinaux **22, 24** sont disposés derrière les traverses, c'est-à-dire que les premier et deuxième éléments longitudinaux **22, 24** sont disposés entre la paroi murale **M** sur laquelle l'installation murale **10** est destinée à être fixée, et les traverses, lorsque l'installation murale **10** est fixée à la paroi murale **M.**

Dans cet exemple, les éléments longitudinaux et les traverses sont réalisés en métal.

Si l'on s'intéresse plus particulièrement à deux paires de traverses adjacentes, par exemple les paires de traverses du premier montant **20** référencées **30, 30'** et représentées sur la figure **1****,** que l'on appelle ici paire de traverses supérieures **30** et paire de traverses inférieures **30',** on constate que la paire de traverses supérieures **30** comporte une première traverse supérieure **30a** et une deuxième traverse supérieure **30b,** disposée sous la première traverse supérieure **30a.** Par ailleurs, la paire de traverses inférieures **30'** comporte une première traverse inférieure **30'a** et une deuxième traverse inférieure **30'b.**

Par exemple et de manière non limitative, la première traverse supérieure **30a** et la première traverse inférieure **30'a** sont parallèles et transversalement distantes l'une de l'autre de la distance **E** qui est sensiblement égale à la distance séparant la deuxième traverse supérieure **30b** et la deuxième traverse inférieure **30'b.**

Le premier montant **20** comporte en outre un premier moyen de fixation supérieur **40** et un premier moyen de fixation inférieur **42 ;** par exemple et de manière non limitative, les premiers moyens de fixation supérieur et inférieur **40, 42** comportent chacun une plaque disposée entre deux traverses d'une paire de traverses. Par ailleurs, les plaques des moyens de fixation supérieur **40** et inférieur **42** sont fixées, par exemple soudées, aux éléments longitudinaux **22, 24.**

En outre, les premiers moyens de fixation supérieurs et inférieurs **40, 42** comportent chacun un orifice de fixation **44, 46,** par exemple formé dans leur plaque respective.

Le premier moyen de fixation supérieur **40** comporte un premier axe, passant par l'orifice de fixation **44,** et autour duquel le premier montant **20** peut être pivoté, lorsque le premier moyen de fixation supérieur **40** est fixé à une paroi murale.

Par ailleurs, le premier montant **20** comporte un premier moyen de repérage **48** ; par exemple et de manière non limitative, le premier moyen de repérage **48** comporte une plaque solidarisée, par exemple par soudure, aux premier et deuxième éléments longitudinaux **22, 24.**

Tel que représenté en particulier sur la figure **1****,** le premier moyen de repérage **48** comporte un orifice de fixation **50,** l'orifice de fixation **50** constituant, par exemple et de manière non limitative, également un orifice de repérage dont l'utilité apparaîtra plus clairement dans la suite de la description. On pourrait bien évidemment concevoir, et sans sortir du cadre de la présente invention, un premier moyen de repérage **48** comportant des orifices de fixation et de repérage distants et distincts l'un de l'autre.

Le premier moyen de repérage **48** comporte un deuxième axe passant par l'orifice de repérage **50.**

Tel que représenté sur la figure **1****,** le premier moyen de repérage **48** est distant du premier moyen de fixation supérieur **40** d'une première distance **d ;** plus particulièrement, l'orifice de repérage et l'orifice de fixation **44** du premier moyen de fixation supérieur **40** sont espacés l'un de l'autre de la première distance **d.** En d'autres termes, les premier et deuxième axes, passant respectivement par l'orifice de fixation **44** du premier moyen de fixation supérieur **40** et par l'orifice de repérage du premier moyen de repérage **48** sont distants l'un de l'autre de la première distance **d.**

De manière similaire, le deuxième montant **120** de l'installation murale **10** présente une deuxième direction longitudinale **L2** et des premier et second éléments longitudinaux **122, 124** s'étendant de manière sensiblement parallèle l'un à l'autre, selon la deuxième direction longitudinale **L2,** les premier et deuxième éléments longitudinaux **122, 124** étant distants l'un de l'autre de la distance **D,** par exemple identique à celle séparant les premier et second éléments longitudinaux **22, 24** du premier montant **20.**

De manière similaire au premier montant **20,** le deuxième montant **120** comprend également des paires de traverses horizontales **130, 130', 130",** et des deuxièmes moyens de fixation supérieur **140** et inférieur **142.**

Tel que cela apparaîtra plus clairement dans la suite de la description, les paires de traverses horizontales **30, 30', 30", 130, 130', 130"** des premier et deuxième montants **20, 120** forment des moyens de montage.

Par exemple et de manière non limitative, le deuxième montant **120** comporte également un deuxième moyen de repérage **148,** comprenant par exemple une plaque solidarisée aux premier et second éléments longitudinaux **122, 124** et dans laquelle sont formés des orifices de fixation et de repérage. Le deuxième moyen de repérage **148** est distant du deuxième moyen de fixation supérieur **140** de la première distance **d,** de manière que l'utilisateur peut utiliser indifféremment le premier ou le deuxième montant pour le montage du système de rangement **8.**

On pourrait également concevoir des premier et deuxième montants **20, 120** dont les moyens de repérage seraient agencés de manière équidistante des moyens de fixation supérieurs **40, 140** et inférieurs **42, 142,** de manière que l'utilisateur puisse utiliser, pour le montage du système de rangement **8** qui sera décrit plus en détails dans la suite de la description, les premier et deuxième montants **20, 120** dans l'un ou l'autre des sens définis par leur direction longitudinale respective **L1, L2.**

Dans l'exemple représenté en figure **1****,** les premier et deuxième montants **20, 120** présentent une structure identique ; on pourrait cependant concevoir, sans sortir du cadre de la présente invention, une installation murale **10** dont les premier et deuxième montants **20, 120** présenteraient des différences, et en particulier un deuxième montant **120** qui ne comporterait pas de deuxième moyen de repérage.

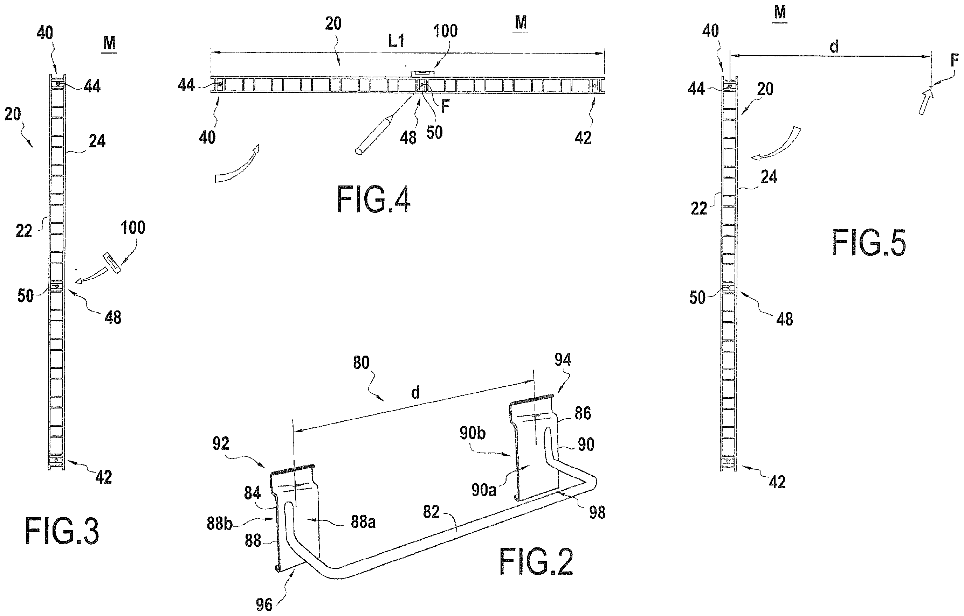

Le système de rangement **8** selon la présente invention comporte également un accessoire de rangement **80,** dont un exemple est représenté sur la figure **2** **;** l'accessoire de rangement **80** est configuré pour être monté de manière amovible à l'installation murale **10,** et plus particulièrement à chacun des premier et deuxième montants **20, 120.**

L'exemple d'accessoire de rangement **80** représenté sur la figure **2** comporte un élément de rangement **82,** présentant par exemple la forme d'une tringle pour recevoir un objet tel qu'une serviette.

En outre, l'accessoire de rangement **80** comporte des premier et deuxième dispositifs de fixation **84, 86** espacés l'un de l'autre de la première distance **d.**

Tel que représenté sur la figure **2****,** les premier et deuxième dispositifs de fixation **84, 86** comportent chacun un corps **88, 90** présentant ici la forme d'une plaque sensiblement rectangulaire. Les premier et deuxième dispositifs de fixation **84, 86** comprennent une partie d'extrémité supérieure **92, 94** formant chacune un crochet et une partie d'extrémité inférieure **96, 98.** Les parties d'extrémité supérieures **92, 94** et les parties d'extrémité inférieures **96, 98** s'étendent respectivement depuis les extrémités supérieures et inférieures du corps **88, 90.**

Il apparaît, en particulier à l'observation de la figure **2****,** que les corps des premier et deuxième dispositifs de fixation **84, 86** présentent une largeur ; on désigne ainsi, par première distance **d** séparant les premier et deuxième dispositifs de fixation **84, 86,** la distance séparant le centre des corps **88, 90** des dispositifs de fixation **84, 86.**

Les corps **88, 90** des dispositifs de fixation **84, 86** présentent chacun une face avant **88a, 90a** et une face arrière **88b, 90b** opposée à la face avant, la face avant étant celle qui est tournée vers l'élément de rangement **82.** Plus précisément, l'élément de rangement **82** est fixé solidairement à la face avant **88a, 90a** des premier et deuxième dispositifs de fixation **84, 86.**

Les faces arrière **88b, 90b** des dispositifs de fixation **84, 86** sont sensiblement planes et présentent une couche de revêtement **95** dont l'utilité apparaîtra plus clairement par la suite.

Les figures **3** à **7** représentent les différentes étapes du procédé de montage sur une paroi murale **M** du système de rangement **8** selon la présente invention.

On fixe tout d'abord sur la paroi murale **M** le premier moyen de fixation supérieur **40** du premier montant **20,** par exemple au moyen d'une vis passée au travers de l'orifice de fixation **44** du premier moyen de fixation supérieur **40.**

On fixe ensuite, par exemple de manière amovible, un moyen de contrôle **100** sur le premier montant **20,** par exemple sur l'un de ses éléments longitudinaux **22, 24.** L'invention porte ainsi également sur un kit d'installation comprenant l'installation murale **10** et le moyen de contrôle **100.**

On pivote ensuite le premier montant **20** dans le plan de la paroi murale **M** autour du premier moyen de fixation supérieur **40,** plus particulièrement autour du premier axe passant par l'orifice de fixation **42** du premier moyen de fixation supérieur **40,** de manière que la première direction longitudinale **L1** s'étende selon une direction sensiblement horizontale.

Par exemple et de manière non limitative, le moyen de contrôle **100** comporte un niveau à bulle, le moyen de contrôle **100** étant ainsi configuré pour permettre de contrôler que la première direction longitudinale **L1** du premier montant **20** s'étend bien selon une direction sensiblement horizontale, à la suite de son pivotement autour du premier moyen de fixation supérieur **40** dans le plan de la paroi murale **M.**

Ensuite, et tel que représenté sur la figure **4****,** on identifie sur la paroi murale **M** une position de fixation **F** correspondant à la position du premier moyen de repérage **48** du premier montant **20,** et plus particulièrement correspondant à la position de l'orifice de repérage **50** du premier moyen de repérage **48.**

Par exemple et de manière non limitative, l'identification de la position de fixation **F** est réalisée par le marquage de ladite position au moyen de la mine d'un stylo passée au travers de l'orifice de repérage du premier moyen de repérage **48.**

On pivote ensuite, tel que représenté sur la figure **5****,** le premier montant **20** dans le plan de la paroi murale **M** autour du premier axe passant par l'orifice de fixation **42** du premier moyen de fixation supérieur **40,** de manière à exposer la position de fixation **F.**

Il apparaît ainsi que la distance séparant le premier moyen de fixation supérieur **40,** et plus particulièrement l'axe de l'élément de fixation passé au travers de l'orifice de fixation **42,** de la position de fixation **F** identifiée préalablement est égale à la première distance **d** séparant le premier moyen de fixation supérieur **40** et le premier moyen de repérage **48** du premier montant **20.**

On fixe ensuite sur la position de fixation **F** le deuxième moyen de fixation supérieur **140** du deuxième montant **120,** par exemple au moyen d'une vis passée au travers de l'orifice de fixation **142** du deuxième moyen de fixation supérieur **140.**

Du fait, en particulier, de l'action de la gravité sur les premier et deuxième montants **20, 120** de l'installation murale **10,** par suite de la fixation sur la paroi murale **M** du premier moyen de fixation supérieur **40** et du deuxième moyen de fixation supérieur **140,** les premier et deuxième montants **20, 120** sont disposés de manière que les première et seconde directions longitudinales **L1, L2** s'étendent de manière sensiblement parallèles l'une à l'autre, de préférence selon une direction sensiblement verticale.

De manière à favoriser la disposition des première et seconde directions longitudinales **L1, L2** selon une direction sensiblement verticale, l'accessoire de rangement **80** peut être fixé de manière amovible aux traverses disposées à proximité des premier et deuxième moyens de fixation inférieurs **42, 142.**

On fournit ensuite l'accessoire de rangement **80,** décrit précédemment, et on fixe de manière amovible les premier et deuxième dispositifs de fixation **84, 86** aux premier et deuxième montants **20, 120.**

Plus particulièrement, les premier et deuxième dispositifs de fixation **84, 86** coopèrent avec les paires de traverses horizontales **30, 30', 130, 130'** des premier et deuxième montants **20, 120** pour permettre la fixation amovible de l'accessoire de rangement **80** sur l'installation murale **10.**

L'orifice de fixation **42** du premier moyen de fixation supérieur **40** et l'orifice de repérage du premier moyen de repérage **48,** d'une part, et l'orifice de fixation **142** du deuxième moyen de fixation supérieur **140,** d'autre part, étant disposés respectivement de manière sensiblement équidistante des éléments longitudinaux **22, 24, 122, 124** des premier et deuxième montants **20, 120,** la première distance **d** séparant l'orifice de repérage et l'orifice de fixation **42** du premier moyen de fixation supérieur **40** correspond sensiblement à la distance séparant l'axe de symétrie des premier et deuxième montants **20, 120.**

On comprend donc que, par suite de la fixation des premier et deuxième montants **20, 120** sur la paroi murale **M** conformément aux différentes étapes décrites précédemment, l'installation murale **10** est agencée de manière que ses montants **20, 120** sont distants de la première distance **d,** en sorte de recevoir les dispositifs de fixation **84, 86** de l'accessoire de rangement **80.**

Tel que cela apparaît en particulier sur la figure **8****,** qui représente une coupe transversale du système de rangement **8,** lorsque l'accessoire de rangement **80** a été fixé de manière amovible à l'installation murale **10,** on constate que la section supérieure du crochet formé par la partie d'extrémité supérieure **94** du deuxième dispositif de fixation **86** s'étend à l'arrière de la première traverse supérieure **130a** tout en prenant appui sur sensiblement une moitié de la partie supérieure de la deuxième traverse supérieure **130b.** Par ailleurs, la partie d'extrémité inférieure **98** du deuxième dispositif de fixation **86** est couplée avec la première traverse inférieure **130'a** pour bloquer le pivotement du deuxième dispositif de fixation **86** autour de la première traverse supérieure **130a.**

Tel que représenté en particulier sur la figure **8****,** la couche de revêtement **95** fixée sur la face arrière **90b** du dispositif de fixation **86** est agencée pour amortir le contact entre l'accessoire de rangement **80** et l'installation murale **10.**

On comprend donc que les premier et deuxième montants **20, 120** comportent des premier et deuxième moyens de montage qui comprennent respectivement les premières et deuxièmes traverses supérieures **30a, 30'a, 30b, 30'b,** et les première traverses inférieures **130a, 130'a.**

Tel que représenté sur la figure **7****,** la fixation murale du système de rangement **8** peut comprendre une étape supplémentaire, consistant à fixer les premier et deuxième moyens de fixation inférieurs **42, 142** des premier et deuxième montants **20, 120** à la paroi murale **M.**

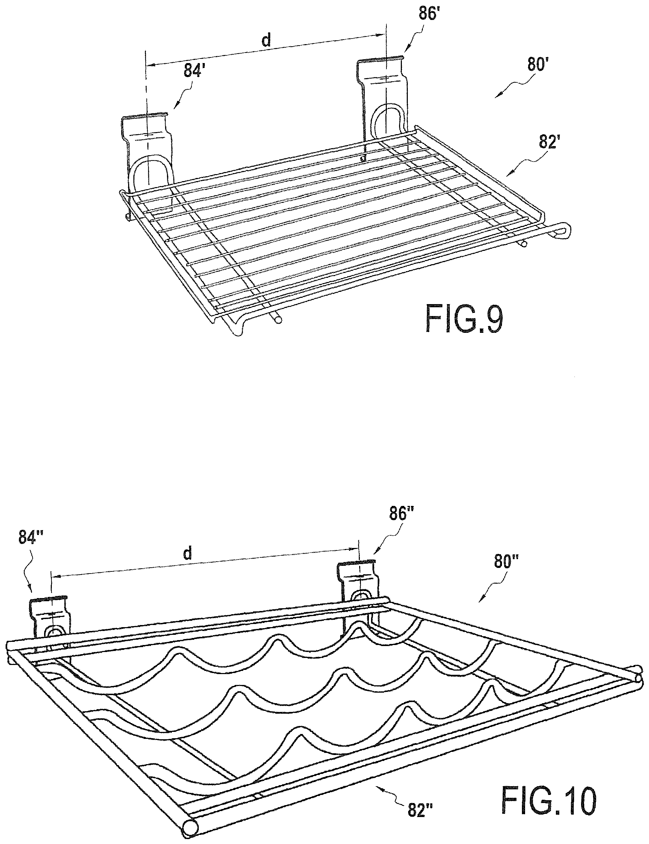

Les figures **9** et **10** représentent schématiquement d'autres exemples d'accessoires de rangement **80', 80"** selon la présente invention ; de manière similaire à l'accessoire de rangement **80** décrit en référence à la figure **2****,** les accessoires de rangement **80', 80"** comportent chacun des premiers dispositifs de fixation **84', 86', 84", 86"** espacés l'un de l'autre de la première distance **d,** et un élément de rangement **82', 82"** ; les accessoires de rangement **80', 80"** sont ainsi configurés pour être fixés de manière amovible aux premier et deuxième montants **20, 120** de l'installation murale **10** lorsque ceux-ci ont été fixés à la paroi murale **M** en étant espacés de la première distance **d.** Par exemple et de manière non limitative, les éléments de rangement **82', 82"** des accessoires de rangement **80', 80"** présentent la forme d'un porte-serviettes et d'un porte-bouteilles.

On pourrait bien évidemment concevoir, sans sortir du cadre de la présente invention, des accessoires de rangement présentant tout autre type d'élément de rangement.

Par ailleurs, dans l'exemple décrit en référence aux différentes figures, le premier montant **20** comporte un unique moyen de repérage **48** ; on pourrait tout à fait concevoir une installation murale **10** dont au moins le premier montant **20** comporterait une pluralité de moyens de repérage, disposés à différentes distances du premier moyen de fixation supérieur **40,** de manière à permettre la fixation murale d'installations murales adaptées à différents types d'accessoires de rangement, et plus particulièrement à des accessoires de rangement dont les dispositifs de fixation présenteraient différents écartements.

En particulier du fait de la présence des éléments longitudinaux **22, 24, 122, 124** espacés l'un de l'autre, le système de rangement selon la présente invention peut également coopérer avec des accessoires de rangement comportant un unique dispositif de fixation.

## Revendications

1. Installation murale (10) comportant au moins un premier (20) et un deuxième (120) montants ayant respectivement une première (L1) et une deuxième (L2) directions longitudinales et étant configurés pour recevoir de manière amovible respectivement un premier (84) et un deuxième (86) dispositifs de fixation d'un accessoire de rangement (80) de l'installation murale (10), les premier et deuxième dispositifs de fixation étant espacés l'un de l'autre d'une première distance (d), les premier et deuxième montants comportant respectivement au moins un premier (40) et un deuxième (140) moyens de fixation supérieurs configurés pour fixer les premier et deuxième montants sur une paroi murale (M), installation dans laquelle au moins le premier montant comporte en outre au moins un premier moyen de repérage (48) ayant un orifice de repérage (50), le premier moyen de repérage et le premier moyen de fixation supérieur étant espacés l'un de l'autre de la première distance (d).

2. Installation murale (10) selon la revendication **1, caractérisée en ce que** le premier moyen de repérage comporte un orifice de fixation (50) pour la fixation murale du premier montant.

3. Installation murale (10) selon la revendication **1** ou **2, caractérisée en ce que** le premier montant comporte un premier (22) et un second (24) éléments longitudinaux s'étendant de manière sensiblement parallèle l'un à l'autre.

4. Installation murale (10) selon la revendication **3, caractérisée en ce que** le premier moyen de repérage comporte une plaque fixée aux premier et second éléments longitudinaux.

5. Installation murale (10) selon l'une quelconque des revendications **1 à 4, caractérisée en ce que** le premier moyen de fixation supérieur (40) est configuré pour permettre au premier montant de pivoter autour d'un premier axe perpendiculaire à la première direction longitudinale.

6. Installation murale (10) selon l'une quelconque des revendications **1 à 5, caractérisée en ce que** les premier et deuxième montants comportent respectivement un premier et un deuxième moyens de montage (30a, 30b, 30'a, 130a, 130b, 130'a) configurés pour coopérer respectivement avec les premier et deuxième dispositifs de fixation de l'accessoire de rangement.

7. Installation murale (10) selon l'une quelconque des revendications **1 à 6, caractérisée en ce que** les premier et deuxième montants comportent en outre un premier et un deuxième moyens de fixation inférieurs (42, 142) configurés pour fixer les premier et deuxième montants sur la paroi murale.

8. Système de rangement (8) comprenant :
- une installation murale (10) selon l'une quelconque des revendications **1 à 7,** et
- au moins un accessoire de rangement (80) ayant un premier (84) et un deuxième (86) dispositifs de fixation espacés l'un de l'autre d'une première distance (d), les premier et deuxième dispositifs de fixation étant configurés pour être fixés de manière amovible respectivement aux premier et deuxième montants (20, 120).

9. Kit d'installation comprenant :
- une installation murale (10) selon l'une quelconque des revendications **1 à 7,** et
- un moyen de contrôle (100) configuré pour être fixé sur le premier montant et pour permettre de contrôler que la première direction longitudinale s'étend selon une direction sensiblement horizontale lors de l'étape de montage.

10. Kit d'installation selon la revendication **9, caractérisé en ce que** le moyen de contrôle (100) est configuré pour être fixé de manière amovible au premier montant.

11. Kit d'installation selon la revendication **9** ou **10, caractérisé en ce que** le moyen de contrôle (100) comporte un niveau à bulle.

12. Procédé de montage sur une paroi murale d'une installation murale (10) selon l'une quelconque des revendications 1 **à 7,** dans lequel :
- on fixe sur la paroi murale (M) le premier moyen de fixation supérieur du premier montant ;
- on pivote le premier montant dans le plan de la paroi murale autour d'un premier axe passant par le premier moyen de fixation supérieur, de manière que la première direction longitudinale s'étende selon une direction sensiblement horizontale ;
- on identifie sur la paroi murale une position de fixation (F) correspondant à la position d'un deuxième axe passant par le premier moyen de repérage du premier montant ;
- on pivote le premier montant dans le plan de la paroi murale autour du premier moyen de fixation supérieur, de manière à exposer la position de fixation ;
- on fixe sur la position de fixation le deuxième moyen de fixation supérieur du deuxième montant.

13. Procédé de montage selon la revendication **12,** dans lequel :
- on fournit en outre un accessoire de rangement (80) comportant un premier et un deuxième dispositifs de fixation espacés l'un de l'autre de la première distance ;
- on dispose les premier et deuxième montants de manière que les première et seconde directions longitudinales s'étendent selon une direction sensiblement verticale ;
- on fixe de manière amovible les premier et deuxième dispositifs de fixation respectivement aux premier et deuxième montants.

14. Procédé de montage selon la revendication **13** d'une installation murale selon la revendication **7,** dans lequel on fixe sur la paroi murale les premier et deuxième moyens de fixation inférieurs des premier et deuxième montants.

## Patentansprüche

1. Wandvorrichtung (10), umfassend wenigstens einen ersten (20) und einen zweiten (120) Pfosten, die eine erste (L1) bzw. eine zweite (L2) Längsrichtung aufweisen und dazu ausgelegt sind, eine erste (84) bzw. eine zweite (86) Vorrichtung zur Befestigung eines Aufräumzubehörs (80) der Wandvorrichtung (10) lösbar aufzunehmen, wobei die erste und die zweite Befestigungsvorrichtung um einen ersten Abstand (d) voneinander beabstandet sind, wobei der erste und der zweite Pfosten wenigstens ein erstes (40) bzw. ein zweites (140) oberes Befestigungsmittel umfassen, die dazu ausgelegt sind, den ersten und den zweiten Pfosten an einer Mauerwand (M) zu befestigen,
Vorrichtung, bei der wenigstens der erste Pfosten ferner wenigstens ein erstes Markierungsmittel (48) mit einer Markierungsöffnung (50) umfasst, wobei das erste Markierungsmittel und das erste obere Befestigungsmittel um den ersten Abstand (d) beabstandet sind.

2. Wandvorrichtung (10) nach Anspruch 1, **dadurch gekennzeichnet, dass** das erste Markierungsmittel eine Befestigungsöffnung (50) für die Wandbefestigung des ersten Pfostens umfasst.

3. Wandvorrichtung (10) nach Anspruch 1 oder 2, **dadurch gekennzeichnet, dass** der erste Pfosten ein erstes (22) und ein zweites (24) Längselement umfasst, die im Wesentlichen parallel zueinander verlaufen.

4. Wandvorrichtung (10) nach Anspruch 3, **dadurch gekennzeichnet, dass** das erste Markierungsmittel eine Platte umfasst, die an dem ersten und dem zweiten Längselement befestigt ist.

5. Wandvorrichtung (10) nach einem der Ansprüche 1 bis 4, **dadurch gekennzeichnet, dass** das erste obere Befestigungsmittel (40) dazu ausgelegt ist, dem ersten Pfosten zu ermöglichen, um eine erste Achse senkrecht zu der ersten Längsrichtung zu verschwenken.

6. Wandvorrichtung (10) nach einem der Ansprüche 1 bis 5, **dadurch gekennzeichnet, dass** der erste und der zweite Pfosten ein erstes bzw. ein zweites Montagemittel (30a, 30b, 30'a, 130a, 130b, 130'a) umfassen, die dazu ausgelegt sind, mit der ersten bzw. der zweiten Befestigungsvorrichtung des Aufräumzubehörs zusammenzuwirken.

7. Wandvorrichtung (10) nach einem der Ansprüche 1 bis 6, **dadurch gekennzeichnet, dass** der erste und der zweite Pfosten ferner ein erstes und ein zweites unteres Befestigungsmittel (42, 142) umfassen, die dazu ausgelegt sind, den ersten und den zweiten Pfosten an der Mauerwand zu befestigen.

8. Aufräumsystem (8) umfassend:
- eine Wandvorrichtung (10) nach einem der Ansprüche 1 bis 7, und
- wenigstens ein Aufräumzubehör (80) mit einer ersten (84) und einer zweiten (86) Befestigungsvorrichtung, die um einen ersten Abstand (d) voneinander beabstandet sind, wobei die erste und die zweite Befestigungsvorrichtung dazu ausgelegt sind, an dem ersten bzw. an dem zweiten Pfosten (20, 120) lösbar befestigt zu werden.

9. Installationsset, umfassend:
- eine Wandvorrichtung (10) nach einem der Ansprüche 1 bis 7 und
- ein Kontrollmittel (100), das dazu ausgelegt ist, an dem ersten Pfosten befestigt zu werden und zu ermöglichen, zu kontrollieren, dass sich die erste Längsrichtung während des Montageschrittes entlang einer im Wesentlichen horizontalen Richtung erstreckt.

10. Installationsset nach Anspruch 9, **dadurch gekennzeichnet, dass** das Kontrollmittel (100) dazu ausgelegt ist, an dem ersten Pfosten lösbar befestigt zu werden.

11. Installationsset nach Anspruch 9 oder 10, **dadurch gekennzeichnet, dass** das Kontrollmittel (100) eine Wasserwaage umfasst.

12. Verfahren zur Montage einer Wandvorrichtung (10) nach einem der Ansprüche 1 bis 7 an einer Mauerwand, bei dem:
- an der Mauerwand (M) das erste obere Befestigungsmittel des ersten Pfostens befestigt wird,
- der erste Pfosten in der Ebene der Mauerwand um eine erste Achse, welche durch das erste obere Befestigungsmittel verläuft, verschwenkt wird, so dass die erste Längsrichtung in einer im Wesentlichen horizontalen Richtung verläuft,
- an der Mauerwand eine Befestigungsposition (F) bestimmt wird, die der Position einer zweiten Achse entspricht, welche durch das erste Markierungsmittel des ersten Pfostens verläuft,
- der erste Pfosten in der Ebene der Mauerwand um das erste obere Befestigungsmittel verschwenkt wird, um die Befestigungsposition offen zu legen,
- an der Befestigungsposition das zweite obere Befestigungsmittel des zweiten Pfostens befestigt wird.

13. Montageverfahren nach Anspruch 12, bei dem:
- ferner ein Aufräumzubehör (80) bereitgestellt wird, das eine erste und eine zweite Befestigungsvorrichtung, welche um den ersten Abstand voneinander beabstandet sind, umfasst,
- der erste und der zweite Pfosten derart angeordnet werden, dass sich die erste und die zweite Längsrichtung entlang einer im Wesentlichen vertikalen Richtung erstrecken,
- die erste und die zweite Befestigungsvorrichtung an dem ersten bzw. dem zweiten Pfosten lösbar befestigt werden.

14. Verfahren nach Anspruch 13 zur Montage einer Wandvorrichtung nach Anspruch 7, bei dem an der Mauerwand das erste und das zweite untere Befestigungsmittel des ersten und des zweiten Pfostens befestigt werden.

## Claims

1. A wall installation (10) comprising at least first and second uprights (20, 120) having respective first (L1) and second (L2) longitudinal directions and being configured to receive removably respective a first (84) and a second (86) fastener devices of a storage accessory (80) of the wall installation (10), the first and second fastener devices being spaced apart from each other by a first distance (d), the first and second uprights respectively including at least a first (40) and a second (140) top fastener means configured to fasten the first and second uprights to a wall (M);
• in which installation at least the first upright further includes at least a first registering means (48) having a registering orifice (50), the first registering means and the first top fastener means being spaced apart from each other by the first distance (d).

2. A wall installation (10) according to claim 1, **characterized in that** the first registering means include a fastener orifice (50) for fastening the first upright to the wall.

3. A wall installation (10) according to claim 1 or 2, **characterized in that** the first upright includes a first (22) and a second (24) longitudinal elements extending substantially parallel to each other.

4. A wall installation (10) according to claim 3, **characterized in that** the first registering means comprise a plate fastened to the first and second longitudinal elements.

5. A wall installation (10) according to any one of claims 1 to 4, **characterized in that** the first top fastener means (40) are configured to enable the first upright to pivot about a first axis perpendicular to the first longitudinal direction.

6. A wall installation (10) according to any one of claims 1 to 5, **characterized in that** the first and second uprights include respective a first and a second mounting means (30a, 30b, 30'a, 130a, 130b, 130'a) configured to cooperate respectively with the first and second fastener devices of the storage accessory.

7. A wall installation (10) according to any one of claims 1 to 6, **characterized in that** the first and second uprights further include first and second bottom fastener means (42, 142) configured to fasten the first and second uprights to the wall.

8. A storage system (8) comprising:
• a wall installation (10) according to any one of claims 1 to 7; and
• at least one storage accessory (80) having a first (84) and a second (86) fastener devices spaced apart from each other by a first distance (d), the first and second fastener devices being configured to be removably fastened respectively to the first and second uprights (20, 120).

9. An installation kit comprising:
• a wall installation (10) according to any one of claims 1 to 7; and
• verification means (100) configured to be fastened to the first upright and to verify that the first longitudinal direction extends in a substantially horizontal direction during the mounting step.

10. An installation kit according to claim 9, **characterized in that** the verification means (100) are configured to be removably fastened to the first upright.

11. An installation kit according to claim 9 or claim 10, **characterized in that** the verification means (100) include a spirit level.

12. A method of wall mounting a wall installation (10) according to any one of claims 1 to 7, wherein the following steps are performed:
• fastening the first top fastener means of the first upright to the wall (M);
• pivoting the first upright in the plane of the wall about a first axis passing through the first top fastener means, so that the first longitudinal direction extends in a substantially horizontal direction;
• identifying on the wall a fastening position (F) corresponding to the position of a second axis passing through the first registering means of the first upright;
• pivoting the first upright in the plane of the wall about the first top fastener means so as to expose the fastening position; and
• fastening the second top fastener means of the second upright at the fastening position.

13. A mounting method according to claim 12, wherein the following steps are performed:
· further supplying a storage accessory (80) having a first and a second fastener devices spaced apart from each other by the first distance;
· placing the first and second uprights in such a manner that the first and second longitudinal directions extend in a substantially vertical direction; and
· removably fastening the first and second fastener devices respectively to the first and second uprights.

14. A mounting method according to claim 13, of a wall installation according to claim 7, wherein the first and second bottom fastener means of the first and second uprights are fastened to the wall.
